# EUROPEAN PATENT APPLICATION

(11) **EP 2 073 154 A1**
(43) Date of publication of application: **24.06.2009**
(21) Application number: 07291576.2
(22) Date of filing: 20.12.2007
(51) Int. Cl.: G06K 19/077

(54) **Biometric micro-module**

(71) Applicant: Gemalto SA, 92190 Meudon (FR)
(72) Inventor: Gaston, Lorenzo, 92197 Meudon Cedex (FR)
(74) Representative: Wlodarczyk, Lukasz Georges Kazimierz

(57) **Abstract**

The invention relates to a micro-module (110) comprising an outside surface which consists primarily of electrical contacts (C1...C8). The outside surface comprises a substantially rectangular area (200) free of electrical contacts. A biometric sensor is embedded in said area (200). The invention also relates to a smart card embedding such micro-module (110).

## Description

The invention relates to micro-modules, in particular micro-modules used for smart cards.

As known in the art, and explained in particular on Wikipedia, a smart card, chip card, or integrated circuit card (ICC), can be any pocket-sized card with one or more embedded integrated circuit. Smart cards can typically receive input, process the input, and deliver an output. Smart cards may be simple memory cards containing only non-volatile memory storage components, and possibly some specific security logic. But smart cards can also be more elaborate microprocessor cards containing volatile memory and microprocessor components. Smart cards bodies are typically made of plastic, generally PVC or ABS. Smart cards dimensions typically correspond to credit card size. In particular, the ID-1 form factor of ISO 7810 defines 85.60 x 53.98 mm smart cards. Another popular size is ID-000 which is 25 x 15 mm. Both are .76 mm thick.
Smart cards can comprise a contact interface (for example as specified in ISO 7816-2), a contact-less interface (such as Mifare), or both (combicards). When multiple interfaces are provided, each interface may be associated with a specific chip, or a single chip may be provided with multiple interfaces.
Contact smart cards typically comprise a micro-module which outside surface (i.e. the surface of the micro-module which is visible once the micro-module has been embedded in the smart card) is in general rectangular (about 1cm by 1cm) and mostly metallic (e.g. gold) since it consists primarily of electrical contacts. When the smart card is inserted into a reader, the outside surface of the micro-module establishes contact with corresponding electrical connectors of the reader. The reader can then read information from the smart card, write information back, etc. ISO/IEC 7816 and ISO/IEC 7810 series of standards define possible physical shape and positions of the electrical connectors, the electrical characteristics, the communications protocols, the format of the commands sent to the smart card and the responses returned by the smart card, robustness of the card, the functionality. Contact smart cards may contain batteries, but most often energy is supplied by the smart card reader.
A second type is the contactless smart card, in which the chip communicates with the card reader for example through RFID induction technology (typically at data rates of 106 to 848 kbit/s). These cards require proximity to an antenna to complete transaction. They are often used when transactions must be processed quickly or hands-free, such as on mass transit systems, where smart cards can be used without even removing them from a wallet. A standard for contact-less smart card communications is ISO/IEC 14443, dated 2001. It defines two types of contact-less cards ("A" and "B"), and allows for communications at distances up to 10 cm. There had been proposals for ISO 14443 types C, D, E and F that have been rejected by the International Organization for Standardization. An alternative standard for contact-less smart cards is ISO 15693, which allows communications at distances up to 50 cm. Examples of payment cards which are adapted for contact-less technology comprise products from Visa (Quick VSDC - "qVSDC", Visa Wave, MSD), MasterCard (PayPass Magstripe, PayPass MChip), or American Express (Express Pay). Major roll-outs of contact-less payment cards started in 2005 in USA, and in 2006 in Asia and Europe. Contact-less transactions typically cover a payment range of ∼$5-50 only because the user does not type a PIN code. There is an ISO 14443 PayPass implementation. PayPass implementations can be EMV or non EMV. Non-EMV cards typically work like magnetic stripe cards, which is a typical card technology in the USA (see PayPass Magstripe and VISA MSD). Such cards typically do not control the remaining amount. All payments typically take place without a PIN and usually in off-line mode. The security level of such transactions is not greater than with classical magnetic stripe card transactions. EMV cards may have two interfaces (contact and contact-less) and may work as a normal EMV card via contact interface. Via contact-less interface they work almost like an EMV (card command sequence adopted on contact-less features as low power and short transaction time).

In order to securely authenticate a card holder to a smart card, it has been proposed to embed a fingerprint sensor in the smart card, and to implement a so called "match on card" (MOC) mechanism whereby the fingerprint can be verified inside the card (without having to leak the reference fingerprint outside the card for comparison with the fingerprint which was just scanned).

One problem with state of the art smart cards comprising a fingerprint sensor is that they are difficult to manufacture, since they typically require the embedding of a fingerprint sensor in addition to the embedding of a micro-module, and the connection of the biometric sensor to the micro-module inside the card body, which connection should withstand the manufacturing process (lamination, nearby embossing, etc.). This problem is not specific to smart cards and applies equally to other devices embedding a fingerprint sensor.

It is an object of the invention to propose an improved micro-module, which is usable in particular to manufacture more easily a smart card with finger print recognition capability. The micro-module according the invention is also suitable to manufacture other types of devices, such as MMC or SD cards, or any device comprising a contact interface with an internal chip.

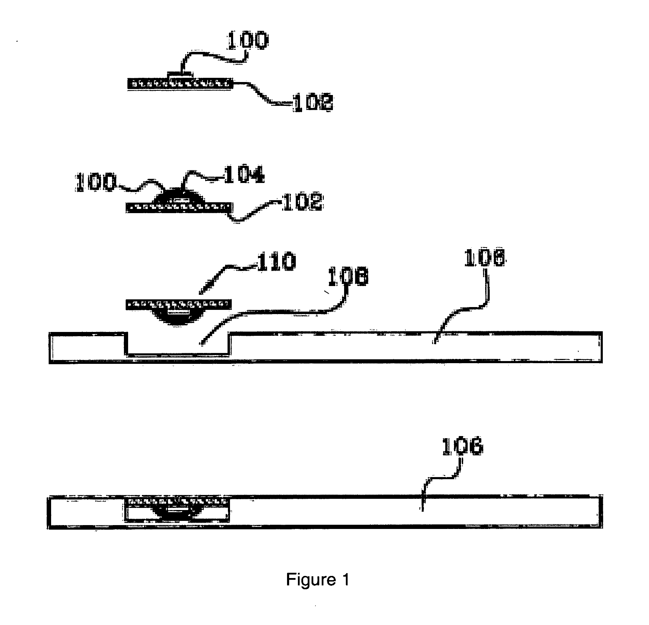

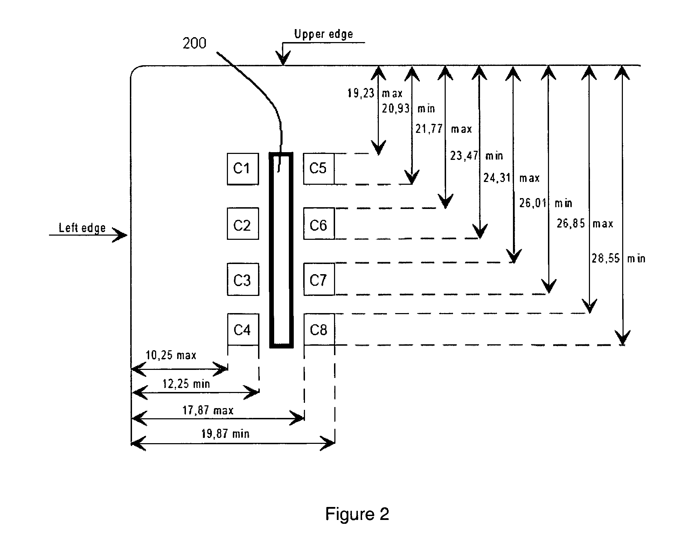

The invention and its advantages will be explained more in details in the following specification referring to the appended drawings, in which Figure 1 represents a known method for embedding a micro module on a smart card, and Figure 2 represents a smart card comprising a micro-module according to a preferred embodiment of the invention.

Figure 1 shows a simplified process for creating a basic micro-module according to state of the art and embedding it in a known smart card body. There are alternative well known processes, which work well too. The process is described more in details in particular in WO/0031686. A chip 100 is transferred onto a continuous metal strip 102. The metal strip contains electrical contacts which are connected to corresponding contacts on the chip (e.g. gold wire bonding). An electrical contact should be understood according to the definition given for example in ISO 7816-1, that is: a conducting element ensuring galvanic continuity between integrated circuit(s) and external interfacing equipment(s). A protective resin 104 is then applied, and after cutting of the metal strip 102 this forms a micro-module 110. The micro-module 110 may then be transferred into a cavity 108 provided in the card body 106 of a smart card such that the metal strip 102 which forms the outside surface of the micro-module is flush with the card surface. In practice there is typically no or very little space between contacts, any available space between electrical contacts being typically filled with dummy contacts (i.e. contacts not necessarily connected to the chip), two contiguous contacts being separated by the minimum space necessary to provide electrical isolation. A person watching the outside surface can't typically tell visually whether a contact is an electrical contact or a dummy contact (i.e. whether it's connected to the chip or not). The person may know that the smart card complies with a standard which specifies the shape and position of electrical contacts. However the smart card could also implement additional proprietary electrical contacts in positions not specified by the standard, which the person could consider as dummy contacts, while they are not.

A micro-module according to a preferred embodiment of the invention comprises an outside surface which consists primarily of electrical contacts. Typically, the outside surface measures less than 30mm by 30mm (if substantially rectangular), or less than about 30mm in diameter (if substantially circular). The outside surface of the micro-module comprises a substantially rectangular area free of electrical contacts (which may be occupied by a dummy contact in corresponding state of the art micro-modules). Typically, the substantially rectangular area measures at least 0,4mm by 5mm. The substantially rectangular area may be a subset of a slightly greater non rectangular area (e.g. a violin shape area contains a rectangle). A biometric sensor is embedded in said substantially rectangular area. The biometric sensor can be rectangular, or at least substantially rectangular (e.g. it may be slightly curved, for example it may be a slightly arched rectangle corresponding to the shape of the tip of the finger). One of the advantages of the invention is the fact that the sensor is very close to the chip, which makes attacks more difficult than when the sensor is distant from the chip and connected through long wires which can be hacked.
Micro-modules according to a preferred embodiment comprise two rows of electrical contacts, the area for the biometric sensor being located between the two rows. In particular, in a preferred embodiment illustrated on Figure 2, the micro-module is inserted in a smart card complying with ISO 7816-2. The micro-module of this preferred embodiment comprises eight electrical contacts C1...C8 and a rectangular area 200 free of electrical contacts. The rectangular area 200 is at least 2mm wide since the left contacts C1, C2, C3 and C4 end at most 17,87mm from the left edge while the right contacts C5, C6, C7 and C8 begin at least 19,87mm from the left edge. Currently, off-the-shelf fingerprint sensors such as those included in Atmel AT77C101B, AT77C102B, AT77C104B, or AT77C105A products are as small as 0,4mm in width by 11,6mm in length, and can therefore fit in the space allowed by ISO7816, the main issue being the width. Such fingerprint sensors are typically 8 pixels wide (the pixel size is approximately 50µm by 50µm). It is therefore necessary to "wipe" the sensor with the finger in order for the sensor to scan the relevant surface of the finger almost line by line (8 lines at a time if there are 8 pixels in the sensor width) and have the fingerprint reconstructed.
In preferred embodiments, the micro-module embeds a battery. It is therefore possible to check the fingerprint of a user in a standalone mode, and then, at a later stage, to insert the smart card (or other medium carrying the micro-module) in a reader, and to carry out the tasks requiring user authentication. In such embodiments, a timeout is preferably implemented in order that a successful standalone authentication can only be used within a predefined delay, for example 2 minutes. It would also be possible to embed the battery in the medium carrying the micro-module rather than in the micro-module itself, however the manufacturing of the medium would be more complex.
In preferred embodiments, the micro-module further comprises a contact-less chip (the contact and contact-less functions may be provided by a single chip or by two separate chips). The micro-module preferably also comprises an antenna, which has to be compact enough to fit in the micro-module. In preferred embodiments, the micro-module is a smart card micro-module and a type of particularly suitable antenna is described in PCT/FR2006/0021012. Smart Packaging Solutions (SPS) sells this type of antennas. The invention is particularly advantageous in the context of contactless micro-modules used in payment smart cards, since contact-less payment smart cards typically don't use a PIN (this would be too long to type) and therefore have a limited maximum transaction amount in order to prevent important frauds with stolen smart cards. With the invention, the card holder can scan his finger through the micro-module before paying (e.g. while queuing). This results in a payment as fast as with state of the art solutions and more secure since the user is authenticated. Once again, a timeout should preferably be implemented. This solution is more secure than a mere switch, which prevents the remote use of a contact-less smart card by a hacker standing close to the card holder, but not the use of a stolen smart card (the thief can activate the switch). The battery is preferably inside the micro-module rather than in the card body for the above mentioned reasons. Alternatively, the card holder could scan his finger when the smart card is in the field of and powered by a contact-less reader. This avoids the use of a battery, but this can slow down the payment slightly (it is no longer possible to anticipate the authentication and carry it out before establishment of the connection with the contact-less reader). This is still faster than typing a PIN code though. In alternative embodiments, a standard antenna is used (antenna located in the device hosting the micro-module rather than in the micro-module itself), but this renders the manufacturing of the hosting device more complex.
In preferred embodiments, the electrical contacts of the micro-module are treated in order to increase their resistance to corrosion. Indeed, the fact that the card holder repeatedly "wipes" the contacts with his finger (the sensor being contiguous with at least certain contacts) could damage them (sweat, etc.). One technique consists in applying the Nickel Hard Surface technique (NiHS) proposed by FCI Microconnections, which has been used successfully to increase the lifetime of the contacts. In the context of the invention, such techniques rather avoid shortening the lifetime of the contacts too much.
The invention also relate to smart cards comprising above described micro-modules.

## Claims

1. Micro-module (110) comprising an outside surface which consists primarily of electrical contacts (C1...C8), the outside surface comprising a substantially rectangular area (200) free of electrical contacts, **characterized in that** a biometric sensor is embedded in said area (200).

2. Micro-module (110) according to claim 1, comprising two rows of electrical contacts (C1...C4 and C5...C8), wherein the area (200) for the biometric sensor is located between the two rows.

3. Micro-module (110) according to any previous claim, further comprising a contact-less chip.

4. Micro-module (110) according to claim 3, further comprising an antenna.

5. Micro-module (110) according to any previous claim, wherein the electrical contacts (C1...C8) are treated in order to increase their resistance to corrosion.

6. Smart card **characterized in that** it comprises a micro-module (110) according to any previous claim.
